# EUROPÄISCHE PATENTSCHRIFT

(11) **EP 3 455 929 B1**
(45) Veröffentlichungstag und Bekanntmachung des Hinweises auf die Patenterteilung: **20.05.2020**
(21) Anmeldenummer: 17735068.3
(22) Anmeldetag: 27.06.2017
(51) Int. Cl.: H02K 9/10, H02K 15/12, F01P 7/04, G05D 23/19

(54) **GENERATOR KÜHLREGELUNG**
GENERATOR COOLING CONTROL
CONTROLE DE REFROIDISSEMENT POUR GÉNÉRATEUR

(30) Priorität: 22.07.2016 DE 102016213469
(43) Veröffentlichungstag der Anmeldung: 20.03.2019
(73) Patentinhaber: Siemens Aktiengesellschaft, 80333 München (DE)
(72) Erfinder: EVENKAMP, Monja, 45128 Essen (DE); MURAWA-GALEN, Markus, 44623 Herne (DE); STEINS, Hendrik, 45134 Essen (DE); STROBEL, Bernd, 26180 Rastede (DE)
(86) Internationale Anmeldenummer: PCT/EP2017/065838
(87) Internationale Veröffentlichungsnummer: WO 2018/015115

(56) Entgegenhaltungen:
- EP-A1- 1 612 916
- EP-A1- 2 658 097
- EP-A2- 2 431 702
- CN-U- 202 616 932
- DE-A1-102012 022 421
- JP-A- 2008 067 471

## Beschreibung

Die Erfindung betrifft ein Verfahren zum Regeln der Kaltgastemperatur eines Kühlgases eines geschlossenen, zumindest einen von einer Kühlflüssigkeit durchströmten Kühler aufweisenden Generatorkühlgaskreislaufs eines Generators.

Die Kaltgastemperatur von Kühlgasen geschlossener Generatorkühlkreisläufe wird bislang stets statisch geregelt. Mit anderen Worten ist die Regelung derart ausgelegt, dass das Kühlgas des Generators bei Inbetriebnahme des Generatorkühlgaskreislaufs einmalig so eingestellt wird, dass sich bei dem angestrebten Leistungsbetrieb innerhalb des Generators eine Temperaturverteilung der Generatorkomponenten auf gewünschtem Temperaturniveau einstellt. Der dann fest gewählte Kühlflüssigkeitsvolumenstrom durch den Kühler ist somit unabhängig von der Betriebsweise des Generators, die Anfahrbetrieb, Leistungsbetrieb, Abfahrbetrieb und Drehwerkbetrieb unterscheidet. Dies führt grundsätzlich dazu, dass der Generator im Leistungsbetrieb bei Schwach- und Teillast sowie bei An-und Abfahrvorgängen überdimensioniert gekühlt wird. Bei den bisherigen Betriebsweisen konventioneller Kraftwerke im Grund- und Mittellastbetrieb, bei denen der Generator über einen sehr langen Zeitraum mit konstanter Leistung betrieben wird, spielte diese starke Kühlung im Schwach-, Teillastbetrieb und bei An- und Abfahrvorgängen jedoch eine sehr untergeordnete Rolle.

Der stetig steigende Anteil der Energieerzeugung aus volatilen Quellen führt allerdings dazu, dass sich die Anforderungen des elektrischen Verbundnetzes an Generatoren ständig ändern. Für die Betriebsweise eines Generators hat dies ein Durchlaufen vieler Start-Stopp-Zyklen und ein häufiges Ändern des Leistungspunktes zur Folge, also eine hohe Anzahl an steilen Lastgradienten und einen häufigen Schwach- und Teillastbetrieb. Entsprechend befinden sich Generatoren meist nicht mehr im thermisch eingeschwungenen stationären Betrieb.

Daraus resultierend unterliegen die Temperaturniveaus innerhalb des Generators sehr hohen und häufigen Schwankungen, die aufgrund unterschiedlichster thermischer Ausdehnungskoeffizienten der jeweiligen Generatorkomponenten thermomechanische Spannungen induzieren, insbesondere im Bereich des Wicklungsstabverbundes. Dies führt zu einer beschleunigten Alterung der Generatorkomponenten, die insbesondere das Isoliersystem des Generators betrifft.

Bekannte Generatorkühlsysteme sind in den Druckschriften EP 2 431 702 A2, JP 2008 067471 A, CN 202 616 932 U, DE 10 2012 022 421 A1, EP 2 658 097 A1 und EP 1 612 916 A1 beschrieben.

Ausgehend von diesem Stand der Technik ist es eine Aufgabe der vorliegenden Erfindung, ein alternatives Verfahren der eingangs genannten Art zu schaffen, das flexibel auf unterschiedliche Betriebsweisen des Generators reagiert.

Zur Lösung dieser Aufgabe schafft die vorliegende Erfindung ein Verfahren der eingangs genannten Art, das die Schritte aufweist:
a) Definieren von Kaltgastemperatur-Sollwerten in Abhängigkeit vom Ständer- und Rotorstrom des Generators, wobei die Kaltgastemperatur-Sollwerte insbesondere einen vorbestimmten Abstand zu Kaltgastemperaturschutzwerten eines Generatorschutzes des Generators aufweisen;
b) Erfassen der aktuellen Kaltgastemperatur;
c) Erfassen des aktuellen Ständer- und Rotorstroms;
d) Ermitteln des zu dem in Schritt c) erfassten Ständerund Rotorstrom zugehörigen Kaltgastemperatur-Sollwertes;
e) Regeln der Kaltgastemperatur durch Verändern des Volumenstroms der dem zumindest einen Kühler zugeführten Kühlflüssigkeit in Abhängigkeit von der Differenz zwischen der in Schritt b) erfassten aktuellen Kaltgastemperatur und dem in Schritt d) ermittelten Kaltgastemperatur-Sollwert; und
f) Wiederholen der Schritte b) bis e) in definierten Zeitabständen.

Dank der Tatsache, dass die Kaltgastemperatur-Sollwerte in Abhängigkeit vom Ständer- und Rotorstrom des Generators, zu denen sie indirekt proportional sind, definiert werden und die Kaltgastemperatur dann in Abhängigkeit von einem dem aktuellen Ständer- und Rotorstrom zugehörigen Kaltgastemperatur-Sollwert geregelt wird, kann sichergestellt werden, dass die durch das Kaltgas hervorgerufene Kühlung zumindest in den meisten Fällen an den aktuellen Betriebszustand des Generators angepasst ist, wodurch innerhalb des Generators ein gleichmäßigeres Temperaturniveau erzielt und die Entstehung bzw. die Häufigkeit thermomechanischer Spannungen reduziert wird. Die Kaltgastemperatur-Sollwerte sind dabei vorteilhaft im Abstand zu so genannten Kaltgastemperaturschutzwerten des Generatorschutzes des Generators gewählt, wenn ein Generatorschutz vorhanden ist. Ein solcher Generatorschutz dient dazu, den Generator bei Überschreitung der Kaltgastemperaturschutzwerte automatisch abzuschalten bzw. abzufahren, um Beschädigungen des Generators zu verhindern. Die Regelung der Kaltgastemperatur erfolgt erfindungsgemäß durch Verändern des Volumenstroms der dem zumindest einen Kühler zugeführten Kühlflüssigkeit, wodurch die aktuelle Kühlleistung des Kühlers variiert wird.

Die in Schritt a) definierten Kaltgastemperatur-Sollwerte in Abhängigkeit vom Ständer- und Rotorstrom des Generators liegen bevorzugt unterhalb der Kaltgastemperaturschutzwerte bei entsprechendem Ständer- und Rotorstrom. Somit kann sichergestellt werden, dass ausreichend Abstand zu den kritischen Temperaturen gehalten wird, die zum Abschalten des Generators führen.

Vorteilhaft wird die aktuelle Kaltgastemperatur in Schritt b) an mehreren Positionen zeitgleich erfasst und bei der Regelung in Schritt e) nur die maximale aktuelle Kaltgastemperatur berücksichtigt. Durch die redundante Erfassung der Kaltgastemperatur wird die Sicherheit des Verfahrens erhöht, insbesondere dann, wenn einer der Temperaturmesser ausfällt.

Bevorzugt wird in Schritt c) der Maximalwert des erfassten aktuellen Ständerstroms und des erfassten aktuellen Rotorstroms ermittelt, wobei in Schritt d) zu dem Maximalwert der zugehörige Kaltgastemperatur-Sollwert ermittelt wird.

Gemäß einer Ausgestaltung des erfindungsgemäßen Verfahrens wird die aktuelle Warmgastemperatur erfasst und bei der Regelung in Schritt e) berücksichtigt. Auch die Erfassung der aktuellen Warmgastemperatur dient zur Erhöhung der Sicherheit des Verfahrens. So kann beispielsweise eine maximale Warmgastemperatur definiert werden, die nicht überschritten werden darf.

Bevorzugt wird die aktuelle Warmgastemperatur an mehreren Positionen zeitgleich erfasst und bei der Regelung in Schritt e) nur die maximale aktuelle Warmgastemperatur berücksichtigt. Durch diese redundanten Messungen wird die Sicherheit des Verfahrens erhöht, insbesondere dann, wenn einer der Temperaturmesser ausfällt.

Vorteilhaft wird die aktuelle Kühlflüssigkeitstemperatur vor Eintritt in den Kühler erfasst und bei der Regelung in Schritt e) berücksichtigt. Auf diese Weise kann die Genauigkeit der Regelung erhöht werden.

Gemäß einer weiteren Ausgestaltung des erfindungsgemäßen Verfahrens wird die aktuelle Ständer- und/oder Rotortemperatur des Generators erfasst und bei der Regelung in Schritt e) berücksichtigt, was ebenfalls zur Genauigkeit der Regelung beiträgt.

Bei spezifischen Bauweisen des Generators - bei direkt gasgekühlten Ständerwicklungsstäben - kann ferner die aktuelle Kühlgastemperatur am Stabaustritt der Ständerwicklung des Generators erfasst und bei der Regelung in Schritt e) berücksichtigt werden.

Bevorzugt wird das Differential von Ständerstrom oder Rotorstrom nach der Zeit ermittelt und bei der Regelung in Schritt e) als Verschwindimpuls berücksichtigt, wodurch die Genauigkeit und Reaktionsschnelligkeit der Regelung verbessert wird.

Vorteilhaft weist der Generatorkühlkreislauf mehrere Kühler auf, wobei in Schritt e) die Volumenströme der den jeweiligen Kühlern zugeführten Kühlflüssigkeit verändert werden. Mehrere Kühler haben den Vorteil, dass eine Kühlung auch bei Ausfall eines der Kühler zumindest teilweise funktionsfähig bleibt.

Bevorzugt ist eine Heizeinrichtung zum optionalen Erwärmen der in den Kühler eintretenden Kühlflüssigkeit vorgesehen. Eine solche Heizeinrichtung ist insbesondere dahingehend von Vorteil, dass ein Auskühlen des Generators im Drehwerkbetrieb verhindert werden kann, wodurch die Temperaturdifferenz zum mechanisch spannungsfreien Zustand verringert wird. Der Kühler kann also wahlweise auch als Wärme an das Kühlgas abgebender Wärmetauscher verwendet werden.

Gemäß einer spezifischen Ausgestaltung des erfindungsgemäßen Verfahrens ist der Generatorkühlgaskreislauf Bestandteil eines Kraftwerks.

Weitere Merkmale und Vorteile der vorliegenden Erfindung werden anhand der nachfolgenden Beschreibung von Verfahren gemäß Ausführungsformen der Erfindung unter Bezugnahme auf die beiliegende Zeichnung deutlich. Darin ist
- Figur 1: eine schematische Ansicht eines Kühlgaskreislaufs 1 und einer die Kaltgastemperatur des den Kühlgaskreislauf durchströmenden Kühlgases regelnden Regelung;
- Figur 2: eine graphische Ansicht, die KaltgastemperaturSollwerte in Abhängigkeit vom Ständer- und Rotorstrom des Generators zeigt;
- Figur 3: eine schematische Ansicht eines alternativen Kühlgaskreislaufs 1 und einer die Kaltgastemperatur des den Kühlgaskreislauf durchströmenden Kühlgases regelnden Regelung; und
- Figur 4: eine schematische Darstellung einer möglichen Anordnung von als Nutenwiderstandsthermometer ausgebildeten Temperaturmesseinrichtungen.

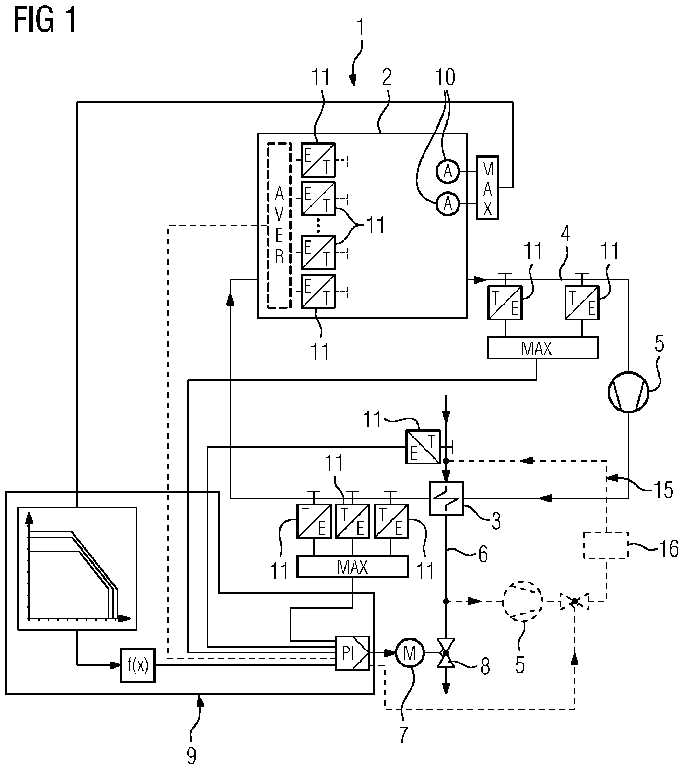

Figur 1 zeigt einen geschlossenen Generatorkühlkreislauf 1, durch den vorliegend im Uhrzeigersinn ein Kühlgas geleitet wird, beispielsweise in Form von Luft oder molekularem Wasserstoff (H₂), und der einen mit einem Kaltgastemperaturschutz versehenen Generator 2, einen Kühler 3, eine den Generator 2 und den Kühler 3 miteinander verbindende Kühlgasleitung 4 sowie eine Fördereinrichtung 5 aufweist. Der Kühler 3 wird einerseits von dem vom Generator 2 kommenden Kühlgas, das nachfolgend auch als Warmgas bezeichnet wird, und andererseits von einer über eine Kühlflüssigkeitsleitung 6 zugeführten Kühlflüssigkeit durchströmt, beispielsweise in Form von Kühlwasser. Er ist dazu ausgelegt, das den Generator 2 verlassende Warmgas durch Wärmeabgabe an die Kühlflüssigkeit zur Erzeugung von Kaltgas zu kühlen, das dann wieder dem Generator 2 zugeführt wird. Die Kühlleistung des Kühlers 3 ist bei konstantem Volumenstrom des Kühlgases abhängig von dem Volumenstrom der durch diesen geleiteten Kühlflüssigkeit, der vorliegend über eine mit einem Stellantrieb 7 versehene, stromabwärts des Kühlers 3 angeordnete Regelarmatur 8 einstellbar ist.

Zum Regeln der Kaltgastemperatur durch Veränderung des Volumenstroms der den Kühler 3 durchströmenden Kühlflüssigkeit sind eine mit dem Stellantrieb 7 der Regelarmatur 8 verbundene Regeleinrichtung 9 und eine Reihe von Sensoren bzw. Messeinrichtungen vorgesehen, welche die von ihnen erfassten Daten an die Regeleinrichtung 9 übermitteln. Im Generator 2 sind Strommesseinrichtungen 10 angeordnet, die den aktuellen Ständerstrom und den aktuellen Rotorstrom des Generators 2 erfassen. Ferner sind mehrere Temperaturmesseinrichtungen 11 innerhalb des Generators 2 positioniert, welche die aktuellen Temperaturen von Generatorkomponenten aufnehmen. So können die innerhalb des Generators 2 angeordneten Temperaturmesseinrichtungen 11 beispielsweise in Form von Nutenwiderstandsthermometern vorgesehen sein, um nur ein Beispiel zu nennen. Weitere Temperaturmesseinrichtungen 11 sind vorliegend innerhalb der Kühlgasleitung 4 angeordnet, und zwar stromaufwärts zwischen dem Kühler 3 und dem Generator 2 zum Erfassen der Kaltgastemperatur einerseits und stromabwärts zwischen dem Generator 2 und dem Kühler 3 zum Erfassen der Warmgastemperatur andererseits. Noch eine weitere Temperaturmesseinrichtung 11 ist in der Kühlflüssigkeitsleitung 6 stromaufwärts vom Kühler 3 positioniert, um die Kühlflüssigkeitstemperatur vor Eintritt in den Kühler 3 zu erfassen.

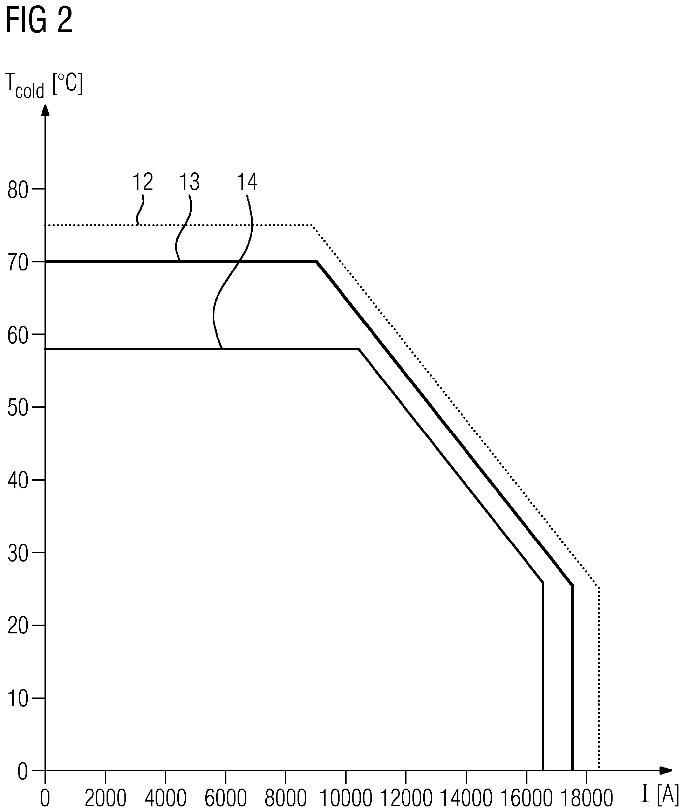

Für die Regelung der Kaltgastemperatur wurden erfindungsgemäß vorab Kaltgastemperatur-Sollwerte in Abhängigkeit vom Ständer- und Rotorstrom des Generators 2 definiert und in der Regeleinrichtung 9 hinterlegt, wobei die Kaltgastemperatur-Sollwerte vorliegend einen vorbestimmten Abstand zu Kaltgastemperaturschutzwerten des Kaltgastemperaturschutzes des Generators 2 aufweisen, wie es nachfolgend unter Bezugnahme auf Figur 2 näher erläutert wird. Figur 2 zeigt ein Diagramm, auf dessen X-Achse der Ständer- und Rotorstrom I in Ampere und auf dessen Y-Achse die Kaltgastemperatur T in °C aufgetragen ist. In dem Diagramm repräsentiert die Linie 12 die Kaltgastemperaturschutzwerte eines beispielsweise bei Kraftwerken üblichen Kaltgastemperaturschutzes, also diejenigen Temperaturen, bei deren Erreichen beispielsweise ein vor dem Generator 2 angeordneter Turbosatz bei entsprechend zugeordnetem Ständer- oder Rotorstrom zwangsweise abgefahren wird, um eine Überhitzung des Generators 2 zu verhindern. Die Linie 13 erstreckt sich im Wesentlichen parallel zu der Linie 12 in Richtung geringerer Temperaturen und repräsentiert die Warnwerte des Kaltgastemperaturschutzes, bei deren Überschreiten ein Alarm für das Bedienpersonal ausgelöst wird, der darauf hinweist, dass ein Abfahren des Turbosatzes kurz bevorsteht.

Die Linie 14 repräsentiert die erfindungsgemäßen Kaltgastemperatur-Sollwerte in Abhängigkeit vom Ständer- und Rotorstrom des Generators 2. Sie erstreckt sich vorliegend im Wesentlichen parallel zu der Linie 12 in Richtung geringerer Temperaturen und weist vorteilhaft einen angemessenen Sicherheitsabstand zur Linie 13 auf, um zu verhindern, dass die Kaltgastemperaturen während eines störungsfreien Generatorbetriebs das Niveau der Warnwerte des Kaltgastemperaturschutzes erreichen können. Der Sicherheitsabstand zur Linie 13 sollte aber auch hinreichend klein sein, um möglichst hohe Temperaturen zuzulassen. Vorteilhaft liegt der Sicherheitsfaktor im Bereich zwischen 2,5 und 7,5 %.

Während des Betriebs des Generators 2 wird die aktuelle Kaltgastemperatur durch die zwischen dem Kühler 3 und dem Generator 2 in der Kühlgasleitung 4 angeordneten Temperaturmesseinrichtungen 11 erfasst, der maximale Wert der erfassten Temperaturen ermittelt und an die Regeleinrichtung 9 übermittelt. Die redundante Erfassung der aktuellen Kaltgastemperatur und die Ermittlung des maximalen Wertes dient hierbei der Erhöhung der Sicherheit bzw. der Genauigkeit der Regelung. Ferner werden der aktuelle Ständerstrom und der aktuelle Rotorstrom durch die Strommesseinrichtungen 10 erfasst. Dem maximal erfassten Stromwert wird dann anhand der vorab definierten Kaltgastemperatur-Sollwerte der dem maximal erfassten Stromwert zugeordnete Kaltgastemperatur-Sollwert zugeordnet, der in die Regelung einfließt. Zusätzlich wird vorliegend die aktuelle Kühlflüssigkeitstemperatur vor Eintritt in den Kühler 3 unter Verwendung der an entsprechender Position in der Kühlflüssigkeitsleitung 6 angeordneten Temperaturmesseinrichtung 11 erfasst und an die Regeleinrichtung 9 übermittelt. Dies ist insbesondere von Bedeutung, wenn die Temperatur der Kühlflüssigkeit stark schwankt, beispielsweise wenn als Kühlflüssigkeit Flusswasser verwendet wird, das aufgrund der Jahreszeiten stark unterschiedlichen Umgebungstemperaturen ausgesetzt ist. Die aktuelle Kühlflüssigkeitstemperatur kann dann in die Regelung einfließen, indem der Kaltgastemperatur-Sollwert mit einem geeigneten Faktor multipliziert wird, um nur ein Beispiel zu nennen. Ferner wird vorliegend die aktuelle Warmgastemperatur unter Verwendung der zwischen dem Generator 2 und dem Kühler 3 in der Kühlgasleitung 4 angeordneten Temperaturmesseinrichtungen 11 mehrfach erfasst, deren maximaler Wert anschließend an die Regeleinrichtung 9 übermittelt wird. Auch die aktuelle Warmgastemperatur kann bei der Regelung durch einen entsprechend Faktor oder dergleichen berücksichtigt werden. Die redundante Temperaturmessung dient auch hier der Erhöhung der Genauigkeit und Sicherheit. Schließlich werden vorliegend auch aktuelle Temperaturen einzelner Generatorkomponenten unter Einsatz der innerhalb des Generators 2 angeordneten Temperaturmesseinrichtungen 11 erfasst und der Mittelwert der erfasst Temperaturen gebildet, der an die Regeleinrichtung 9 übermittelt wird und in die Regelung einfließt. Über die Regeleinrichtung 9 wird schließlich der Stellantrieb 7 der Regelarmatur 8 betätigt, um den Volumenstrom der Kühlflüssigkeit und damit die Kühlleistung des Kühlers 3 derart zu verändern, dass die aktuelle Kaltgastemperatur an den Kaltgastemperatur-Sollwert angepasst wird.

Im Lastbetrieb des Generators 2 besteht die grundlegende Aufgabe der zuvor beschriebenen Kaltgastemperaturregelung darin, eine ausreichende Kühlleistung bereitzustellen, um Lastwechselvorgänge auszugleichen. Primäres Ziel der Regelung ist es dabei, einen möglichst warmen Generator 2 zu erhalten, um thermo-mechanische Belastungen der Generatorkomponenten zu reduzieren. Bei niedrigen Belastungen muss der Kaltgastemperatur-Sollwert entsprechend erhöht, bei hohen Belastungen entsprechend verringert werden, um das Temperaturniveau innerhalb des Generators unabhängig von der Art des Leistungsbetriebs (Volllast oder Teillast) möglichst hoch und konstant zu halten.

Beim Abfahren des Generators 2 mit anschließendem Drehwerksbetrieb ohne beabsichtigtes Stillsetzen, also zur Erzielung eines so genannten Hot-Standby-Modus, ist es wünschenswert, ein möglichst hohes Temperaturniveau innerhalb des Generators 2 aufrecht zu erhalten, um den Drehwerkbetrieb zu überbrücken. Hierfür wird der Volumenstrom der Kühlflüssigkeit bei geringem Stator- oder Rotorstrom minimal eingestellt. Im Falle häufig lang andauernder Drehwerkbetriebe kann es vorteilhaft sein, den Kühler 3 temporär als Heizeinrichtung zu nutzen, um dem Generator 2 Wärme zuzuführen. Dies kann beispielsweise über die in Figur 1 gestrichelt dargestellte Schaltung 15 erzielt werden, die eine Kühlflüssigkeitszweigleitung 16, die vor dem Kühler 3 von der Kühlflüssigkeitsleitung 6 abzweigt und sich zwischen dem Kühler 3 und der Regelarmatur 8 wieder mit dieser vereint, sowie eine Heizeinrichtung 16 und eine eigene Fördereinrichtung 5 aufweist. In dem bei abgesperrter Regelarmatur 8 gebildeten Kreislauf kann die zirkulierende Kühlflüssigkeit durch die Heizeinrichtung 16 erwärmt werden und die aufgenommene Wärme im Kühler 3 an das Kühlgas abgeben.

Beim Abfahren des Generators 2 mit anschließendem kurzzeitigen Drehwerkbetrieb und Stillsetzen ist es das Ziel, eine schnelle und ausreichende Kühlung des Generators 2, insbesondere dessen Rotors zu gewährleisten, um thermisch unterschiedliche Ausdehnungskoeffizienten der Materialien der Generatorkomponenten zu kompensieren und thermischen Ausdehnungen entgegenzuwirken. Hierfür ist der Volumenstrom der dem Kühler 3 zugeführten Kühlflüssigkeit möglichst hoch zu wählen, was durch ein separates Regelungsprogramm erfolgen kann, das vom Bedienpersonal aktiviert werden kann und die zuvor beschriebene Regelung außer Kraft setzt.

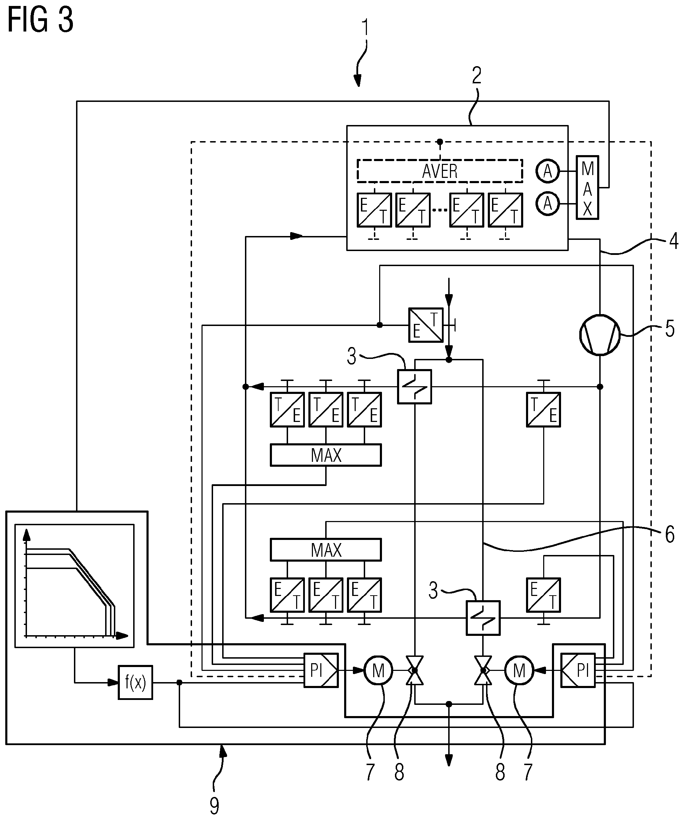

Figur 3 zeigt einen alternativen Generatorkreislauf 1, der sich im Wesentlichen dahingehend von dem in Figur 1 dargestellten Generatorkühlkreislauf 1 unterscheidet, dass zwei parallel angeordnete Kühler 3 vorgesehen sind, wodurch die Sicherheit und auch die Kühlleistung erhöht wird. Auch wenn es in Figur 3 nicht dargestellt ist, kann auch die gezeigte Anordnung mit einer entsprechend angepassten Schaltung 15 versehen werden.

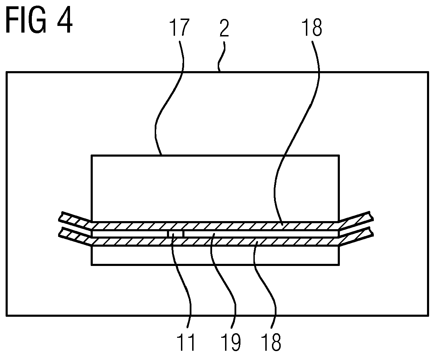

Figur 4 zeigt beispielhaft eine mögliche Anordnung von als Nutenwiderstandsthermometer ausgebildeten Temperaturmesseinrichtungen 11 in einem Statorblechpaket 17 des Generators 2, bei der die Temperaturmesseinrichtungen 11 jeweils im Bereich von zwischen den Blechen 18 vorhandenen, von Kühlgas durchströmten Kühlnuten 19 positioniert sind.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 11: Generatorkühlkreislauf
- 2: Generator
- 3: Kühler
- 4: Kühlgasleitung
- 5: Fördereinrichtung
- 6: Kühlflüssigkeitsleitung
- 7: Stellantrieb
- 8: Regelarmatur
- 9: Regeleinrichtung
- 10: Strommesseinrichtung
- 11: Temperaturmesseinrichtung
- 12: Linie
- 13: Linie
- 14: Linie
- 15: Schaltung
- 16: Heizeinrichtung
- 17: Statorblechpaket
- 18: Blech
- 19: Kühlnut

## Patentansprüche

1. Verfahren zum Regeln der Kaltgastemperatur eines Kühlgases eines geschlossenen, zumindest einen von einer Kühlflüssigkeit durchströmten Kühler (3) aufweisenden Generatorkühlgaskreislaufs (1) eines Generators (2),
wobei das Verfahren die Schritte aufweist:
a) Definieren von Kaltgastemperatur-Sollwerten in Abhängigkeit vom Ständer- und Rotorstrom des Generators (2),
wobei die Kaltgastemperatur-Sollwerte insbesondere einen vorbestimmten Abstand zu Kaltgastemperaturschutzwerten eines Generatorschutzes des Generators (2) aufweisen;
b) Erfassen der aktuellen Kaltgastemperatur;
c) Erfassen des aktuellen Ständer- und Rotorstroms;
d) Ermitteln des zu dem in Schritt c) erfassten Ständerund Rotorstrom zugehörigen Kaltgastemperatur-Sollwertes;
e) Regeln der Kaltgastemperatur durch Verändern des Volumenstroms der dem zumindest einen Kühler (3) zugeführten Kühlflüssigkeit in Abhängigkeit von der Differenz zwischen der in Schritt b) erfassten aktuellen Kaltgastemperatur und dem in Schritt d) ermittelten Kaltgastemperatur-Sollwert; und
f) Wiederholen der Schritte b) bis e) in definierten Zeitabständen.

2. Verfahren nach Anspruch 1,
**dadurch gekennzeichnet, dass**
die in Schritt a) definierten Kaltgastemperatur-Sollwerte in Abhängigkeit vom Ständer- und Rotorstrom des Generators (2) unterhalb der entsprechenden Kaltgastemperaturschutzwerte liegen.

3. Verfahren nach einem der vorhergehenden Ansprüche,
**dadurch gekennzeichnet, dass**
die aktuelle Kaltgastemperatur in Schritt b) an mehreren Positionen zeitgleich erfasst und bei der Regelung in Schritt e) nur die maximale aktuelle Kaltgastemperatur berücksichtigt wird.

4. Verfahren nach einem der vorhergehenden Ansprüche,
**dadurch gekennzeichnet, dass**
in Schritt c) der Maximalwert des erfassten aktuellen Ständerstroms und des erfassten aktuellen Rotorstroms ermittelt wird, und
dass in Schritt d) zu dem Maximalwert der zugehörige Kaltgastemperatur-Sollwert ermittelt wird.

5. Verfahren nach einem der vorhergehenden Ansprüche,
**dadurch gekennzeichnet, dass**
die aktuelle Warmgastemperatur erfasst und bei der Regelung in Schritt e) berücksichtigt wird.

6. Verfahren nach Anspruch 5,
**dadurch gekennzeichnet, dass**
die aktuelle Warmgastemperatur an mehreren Positionen zeitgleich erfasst und bei der Regelung in Schritt e) nur die maximale aktuelle Warmgastemperatur berücksichtigt wird.

7. Verfahren nach einem der vorhergehenden Ansprüche,
**dadurch gekennzeichnet, dass**
die aktuelle Kühlflüssigkeitstemperatur vor Eintritt in den Kühler (3) erfasst und bei der Regelung in Schritt e) berücksichtigt wird.

8. Verfahren nach einem der vorhergehenden Ansprüche,
**dadurch gekennzeichnet, dass**
die aktuelle Ständer- und/oder Rotortemperatur des Generators (2) erfasst und bei der Regelung in Schritt e) berücksichtigt wird.

9. Verfahren nach einem der vorhergehenden Ansprüche,
**dadurch gekennzeichnet, dass**
bei direkt gasgekühlten Ständerwicklungsstäben die aktuelle Kühlgastemperatur am Stabaustritt der Ständerwicklung des Generators (3) erfasst und bei der Regelung in Schritt e) berücksichtigt wird.

10. Verfahren nach einem der vorhergehenden Ansprüche,
**dadurch gekennzeichnet, dass**
das Differential von Ständerstrom oder Rotorstrom nach der Zeit ermittelt und bei der Regelung in Schritt e) als Verschwindimpuls berücksichtigt wird.

11. Verfahren nach einem der vorhergehenden Ansprüche,
**dadurch gekennzeichnet, dass**
der Generatorkühlkreislauf (1) mehrere Kühler (2) aufweist, und dass in Schritt e) die Volumenströme der den jeweiligen Kühlern (3) zugeführten Kühlflüssigkeit verändert werden.

12. Verfahren nach einem der vorhergehenden Ansprüche,
**dadurch gekennzeichnet, dass**
eine Heizeinrichtung (16) zum optionalen Erwärmen der in den Kühler eintretenden Kühlflüssigkeit vorgesehen ist.

13. Verfahren nach einem der vorhergehenden Ansprüche,
**dadurch gekennzeichnet, dass**
der Generatorkühlgaskreislauf (1) Bestandteil eines Kraftwerks ist.

## Claims

1. Method for controlling the cold gas temperature of a cooling gas of a closed cooling gas circuit (1) of a generator (2), which has at least one cooler (3) through which flows a cooling liquid,
wherein the method comprises the steps:
a) defining cold gas temperature setpoint values in dependence of stator and rotor current of the generator (2),
wherein the cold gas temperature setpoint values especially have a predetermined margin in relation to cold gas thermal protection values of a protection system of the generator (2);
b) detecting the prevailing cold gas temperature;
c) detecting the prevailing stator and rotor current;
d) determining the cold gas temperature setpoint value which is associated with the stator and rotor current detected in step c);
e) controlling the cold gas temperature by altering the volumetric flow of the cooling liquid which is fed to the at least one cooler (3) in dependence of the difference between the prevailing cold gas temperature detected in step b) and the cold gas temperature setpoint value determined in step d); and
f) repeating steps b) to e) within defined time intervals.

2. Method according to Claim 1,
**characterized in that**
the cold gas temperature setpoint values defined in step a) in dependence of the stator and rotor current of the generator (2) lie below the corresponding cold gas thermal protection values.

3. Method according to one of the preceding claims,
**characterized in that**
the prevailing cold gas temperature is detected in step b) at a number of positions at the same time and only the maximum prevailing cold gas temperature is taken into consideration during the controlling in step e).

4. Method according to one of the preceding claims,
**characterized in that**
the maximum value of the detected prevailing stator current and the detected prevailing rotor current is determined in step c), and
**in that** the cold gas temperature setpoint value associated with the maximum value is determined in step d).

5. Method according to one of the preceding claims,
**characterized in that**
the prevailing hot gas temperature is detected and taken into consideration during the controlling in step e).

6. Method according to Claim 5,
**characterized in that**
the prevailing hot gas temperature is detected at a number of positions at the same time and only the maximum prevailing hot gas temperature is taken into consideration during the controlling in step e).

7. Method according to one of the preceding claims,
**characterized in that**
the prevailing cooling liquid temperature is detected before entry into the cooler (3) and taken into consideration during the controlling in step e).

8. Method according to one of the preceding claims,
**characterized in that**
the prevailing stator and/or rotor current of the generator (2) is detected and taken into consideration during the controlling in step e).

9. Method according to one of the preceding claims,
**characterized in that**
in the case of directly gas-cooled stator winding bars the prevailing cooling gas temperature is detected at the bar exit of the stator winding of the generator (3) and taken into consideration during the controlling in step e).

10. Method according to one of the preceding claims,
**characterized in that**
the differential of stator current or rotor current to the time is determined and taken into consideration as a vanishing impulse during the controlling in step e).

11. Method according to one of the preceding claims,
**characterized in that**
the generator cooling circuit (1) has a plurality of coolers (2) and **in that** the volumetric flows of the cooling liquid which are fed to the respective coolers (3) are altered in step e) .

12. Method according to one of the preceding claims,
**characterized in that**
a heating device (16) is provided for optional heating of the cooling liquid which enters the cooler.

13. Method according to one of the preceding claims,
**characterized in that**
the generator cooling circuit (1) is a component part of a power plant.

## Revendications

1. Procédé de réglage de la température de gaz froid d'un gaz de refroidissement d'un circuit (1) fermé de gaz de refroidissement d'un générateur (2), ayant au moins un refroidisseur (3), dans lequel passe un liquide de refroidissement,
dans lequel le procédé a les stades :
a) définition de valeurs de consigne de la température de gaz froid en fonction du courant de stator et de rotor du générateur (2), les valeurs de consigne de la température de gaz froid ayant notamment une distance déterminée à l'avance à des valeurs de protection de la température de gaz froid d'une protection du générateur (2) ;
b) relevé de la température en cours du gaz froid ;
c) relevé du courant en cours de stator et de rotor ;
d) détermination de la valeur de consigne de la température du gaz froid associée au courant de stator et de rotor relevé au stade c) ;
e) réglage de la température du gaz froid par modification du courant en volume du liquide de refroidissement envoyé au au moins un refroidisseur (3) en fonction de la différence entre la température du gaz froid en cours relevée au stade b) et la valeur de consigne de la température du gaz froid déterminée au stade d) ; et
f) répétition des stades b) à e) à des intervalles de temps définis.

2. Procédé suivant la revendication 1,
**caractérisé en ce que**
les valeurs de consigne de la température du gaz froid définies au stade a), en fonction du courant de stator et de rotor du générateur (2), sont en dessous des températures de protection de la température du gaz froid correspondantes.

3. Procédé suivant l'une des revendications précédentes,
**caractérisé en ce que**
on relève la température en cours du gaz froid au stade b) en plusieurs positions en même temps et, lors du réglage au stade e), on ne tient compte que de la température maximum en cours du gaz froid.

4. Procédé suivant l'une des revendications précédentes,
**caractérisé en ce qu'**
au stade c), on détermine la valeur maximum du courant de stator en cours relevé et du courant de rotor en cours relevé, et
**en ce que**, au stade d), on détermine la valeur de consigne de la température du gaz froid associée à la valeur maximum.

5. Procédé suivant l'une des revendications précédentes,
**caractérisé en ce que**
l'on relève la température en cours du gaz chaud et on en tient compte dans le réglage au stade e).

6. Procédé suivant la revendication 5,
**caractérisé en ce que**
l'on relève la température en cours du gaz chaud en plusieurs positions en même temps et on ne tient compte, dans le réglage au stade e), que de la température maximum en cours du gaz chaud.

7. Procédé suivant l'une des revendications précédentes,
**caractérisé en ce que**
l'on relève la température en cours du liquide de refroidissement avant l'entrée dans le refroidisseur ( 3) et on en tient compte dans le réglage au stade e).

8. Procédé suivant l'une des revendications précédentes,
**caractérisé en ce que**
l'on relève la température en cours du stator et/ou du rotor du générateur (2) et on en tient compte dans le réglage au stade e).

9. Procédé suivant l'une des revendications précédentes,
**caractérisé en ce que**,
pour des barreaux d'enroulement de stator refroidis directement par du gaz, on relève la température en cours du gaz de refroidissement à la sortie du barreau de l'enroulement statorique du générateur (3) et on en tient compte dans le réglage au stade e).

10. Procédé suivant l'une des revendications précédentes,
**caractérisé en ce que**
l'on détermine le différentiel de courant de stator ou de courant de rotor en fonction du temps et on en tient compte dans le réglage au stade e) sous la forme d'une impulsion évanescente.

11. Procédé suivant l'une des revendications précédentes,
**caractérisé en ce que**
le circuit (1) de refroidissement du générateur a plusieurs refroidisseurs (2) et **en ce que**, au stade e), on modifie les courants en volume du liquide de refroidissement envoyé au refroidisseur (3) respectif.

12. Procédé suivant l'une des revendications précédentes,
**caractérisé en ce qu'**
il est prévu un dispositif (16) de chauffage pour le chauffage éventuel du liquide de refroidissement entrant dans le refroidisseur.

13. Procédé suivant l'une des revendications précédentes,
**caractérisé en ce que**
le circuit (1) de gaz de refroidissement du générateur fait partie d'une centrale électrique.
